Europäisches Patentamt

European Patent Office

Office européen des brevets

(11) Veröffentlichungsnummer: **0 428 477 A1**

## EUROPÄISCHE PATENTANMELDUNG

(21) Anmeldenummer: 90810793.1

(22) Anmeldetag: 17.10.90

(51) Int. Cl.⁵: **D01G 31/00, F16P 3/14**

(30) Priorität: 13.11.89 CH 4164/89

(43) Veröffentlichungstag der Anmeldung:
22.05.91 Patentblatt 91/21

(84) Benannte Vertragsstaaten:
CH DE FR GB IT LI NL

(71) Anmelder: MASCHINENFABRIK RIETER AG
Klosterstrasse 20
CH-8406 Winterthur(CH)

(72) Erfinder: Kyburz, Martin
Alfred-Bauerstrasse 17
CH-8450 Andelfingen(CH)
Erfinder: Anderegg, Peter
Mythenstrasse 28
CH-8400 Winterthur(CH)
Erfinder: Gloor, Thomas
Nägelseestrasse 65
CH-8406 Winterthur(CH)

(74) Vertreter: Frei, Alexandra Sarah
Frei Patentanwaltsbüro Hedwigsteig 6
Postfach 95
CH-8029 Zürich(CH)

(54) Ballenabtragmaschine mit sensorischer Schutzeinrichtung.

(57) Die Ballenabtragmaschinen besitzt eine Sensorik (26-30), welche um die Gefahrenbereiche (18) des Abtragorgans (4) einen mindestens annähernd lükkenlosen Schutzvorhang (35, 36) zwischen Boden (1), Maschinenteilen (3, 4, 23) und Ballen (2) aufgespannt. Bei Eindringen eines Objektes werden Schutzmassnahmen ausgelöst.

FIG. 6A

FIG. 6B

EP 0 428 477 A1

## BALLENABTRAGMASCHINE MIT SENSORISCHER SCHUTZEINRICHTUNG

Die Erfindung liegt im Gebiet der industriellen Textilrohmaterial-Verarbeitung. Sie betrifft eine Ballenabtragmaschine mit einer Schutzeinrichtung gemäss dem Oberbegriff des Patentanspruchs 1.

Textilfaser-Rohmaterial, insbesondere Rohbaumwolle, wird meistens in Ballenform angeliefert. In einer vorgängigen Faseraufbereitung vor der Verspinnung muss das Rohmaterial in die Form loser Flocken gebracht werden. In diesem flockigen Zustand wird das Material anschliessend gereinigt und die Einzelfasern werden in einem Kardierungsprozess gestreckt und parallelisiert.

Die Auflockerung des ballenförmigen Rohmaterials und die sukzessive Abgabe desselben an die Reinigungs- und Kardierungsvorrichtungen werden in der Regel durch schichtweises Abtragen der Ballen mittels einer rasch rotierenden, mit Reiss-Nocken versehenen Abtragwalze bewerkstelligt. Solche Ballenabtragmaschinen sind beispielsweise mit einem Abtrag organ versehen, das von oben her über die in einer Reihe angeordneten Rohtextilballen geführt wird. Durch Hin- und Her-Bewegung des Abtragorgans über die Ballenreihe mit gleichzeitiger Absenkung wird das Rohmaterial von der Abtragwalze schichtweise abgetragen. Die gebildeten Flocken werden mittels eines Ventilators als Flockenstrom den nachfolgenden Vorrichtungen zugeführt.

Freiliegende Partien der rasch rotierenden Abtragwalze können für das Bedienungspersonal eine Gefahr sein, insbesondere dann, wenn das Personal unvorsichtig an der Maschine arbeitet. Diese Gefahr entsteht dann, wenn der gegen unten offene Bereich des Abtragorgans mit der Abtragwalze nicht vollständig über den zu bearbeitenden Ballen liegt. Beispielsweise ist das dann der Fall, wenn das Abtragorgan am Ende der Ballenreihe angelangt ist, wenn eine Ballenreihe mit Ballen ungleicher Höhe bearbeitet wird oder wenn die Ausmasse der Ballen die Abtragwalze nicht völlig abschirmen.

Es erweist sich, dass das Anbringen von Schutzeinrichtungen an solchen Ballenabtragmaschinen mit Schwierigkeiten verbunden ist. Vor allem an den seitlichen Bereichen des Abtragorgans, d.h. an den Seiten in Vorschubrichtung des Abtragorgans, sind die Möglichkeiten beschränkt. Bekannt sind bspw. mechanische Klappen, welche die Gefahrenzone in gewissen Situationen abdecken oder mechanische Schutzeinrichtungen, die mittels Abdeckungen der Abtragwalzen ein Eingreifen in den Gefahrenbereich verhindern. Bei solchen mechanischen Schutzmöglichkeiten, die an sich einen zuverlässigen Schutz gewährleisten könnten, stellt sich jedoch das Problem, dass diese in Vorschubrichtung nicht gegen die Ballen anstehen dürfen. Eine gute Lösung, die diesem Punkt Rechnung trägt, findet sich in der CH Patentanmeldung Nr. 2956/89 derselben Anmelderin. Jene Erfindung verwendet seitliche, starre oder bewegliche Schutzplatten und/oder bewegliche Abdeckungen unter den Abtragwalzen. In gewissen speziellen Arbeitspositionen des Abtragorgans oder bei besonderen Arbeitsstadien wird auch hier der Gefahrenbereich nicht vollständig abgedeckt. Ausserdem haben alle mechanischen Schutzsysteme den Nachteil, dass sie aus mehreren aktiv oder passiv bewegten Komponenten bestehen. Die in jeder Spinnerei übliche, starke Verschmutzung macht eine sehr aufwendige Wartung erforderlich.

Ähnliche Probleme stellen sich auch bei sensorischen Schutzeinrichtungen, da auch Änderungen des Ballenprofils bzw. die Ballen als eindringende Objekte erfasst werden. Daher wurde bei bekannten sensorischen Schutzkonzepten entweder die Ballenabtragmaschine inklusive der Ballenreihe als Gesamtheit überwacht oder die Sensoren erfassten nur limitierte Bereiche womit wiederum nur ein unvollständiger Schutz erzielt wurde.

Aus dem deutschen Patent DE 3032584 ist eine Überwachungseinrichtung bekannt, welche den ganzen Bereich um die Ballenabtragmaschine und die Ballenreihen abschirmt. Ein Lichtstrahl wird von einem Sender ausgestrahlt, mehrfach umgelenkt (reflektiert) und von einem beim Sender liegenden Empfänger registriert, so dass der Strahlengang geschlossen ist. Der umgelenkte Lichtstrahl definiert somit ein Überwachungsgebiet der wesentlich grösser ist, als der eigentliche Gefahrenbereich, d.h. der Bereich unter dem Abtragorgan. Obwohl bei dieser Einrichtung Massnahmen getroffen werden, den abgeschirmten Bereich möglichst klein zu halten (Umschalten zwischen zwei Überwachungsbereichen), ist in der Regel ein zu grosses Überwachungsgebiet erfasst, was zu unnötigen Unterbrechungen des Betriebs führen kann. Zudem besteht die Gefahr, dass der den Gefahrenbereich überwachende Lichtstrahl durch Personen *über*schritten wird oder dass unter diesem hindurchgegangen wird. Ausserdem kann eine sich schon vor dem Einschalten der Maschine innerhalb des Überwachungsgebiets befindende Person nicht mehr erfasst werden. Das System ist zudem auf eine sehr präzise Anordnung der Spiegel angewiesen und ist mithin störanfällig (Verbiegen/Verstellen der Spiegel).

Eine andere Schutzvorrichtung ist aus der DE Offenlegungsschrift 37.33 972 bekannt. Ein stromdurchflossener, elektrischer Leiter ist um das Abtragorgan geführt und erzeugt ein elektromagnetisches Feld. Die durch herannahende Personen bewirkte Feldänderung soll durch eine Kontrollvorrichtung festgestellt werden. Letztere betätigt dann einen Endschalter. Da die Anordnungsmöglichkeiten des Leiters beschränkt sind, kann diese Vorrichtung nur einen limitierten Raum erfassen, welcher grundsätzlich auf einen Bereich über und seitlich der Öffnung für die Abtragwalzen beschränkt ist. Besonders nachteilig erweist sich die Tatsache, dass von unten in den Gefahrenbereich eindringende Personen unter Umständen überhaupt nicht detektiert werden oder das Messfeld müsste so stark ausgedehnt werden, dass wiederum unnötige Unterbrechungen verursachende Gebiete um das Abtragorgan miterfasst werden. Ungelöst ist hier das Problem, dass auch Ballen grundsätzlich durch den Sensor erfasst werden, sofern das Feld ausgedehnt wird. Konstruktionsbedingt kann daher nur ein beschränkter Bereich über den Ballen überwacht werden kann, was bedeutet, dass der Schutz unvollständig bleibt. Ausserdem ist auch die Frage der Selbstüberwachung ungelöst.

Ein weitere sensorische Schutzeinrichtung ist aus der CH Patentanmeldung Nr. 120/89-1 derselben Anmelderin bekannt. Diese ermöglicht durch sensorische Mittel eine Überwachung des Stirnbereichs des Abtragorgans. Die vorliegende Erfindung ist darauf ausgerichtet, einen umfassenden Schutz des gesamten Gefahrenbereichs, insbesondere auch eine Überwachung der Seitenbereiche des Abtragorgans zu gewährleisten.

Es ist Aufgabe der Erfindung, eine sensorische Schutzmassnahme aufzuzeigen und eine Einrichtung zu schaffen, welche einen umfassenden Schutz des Gefahrenbereichs gewährleistet, wobei der Überwachungsbereich geschlossen sein und in optimierter Form minimal gehalten werden soll.

Diese Aufgabe wird durch die im kennzeichnenden Teil des Patentanspruchs 1 genannten Merkmale gelöst.

Die Erfindung zeichnet sich dadurch aus, dass der problematische Gefahrenraum durch Sensoren umfassend abgeschirmt wird, so dass es nicht möglich ist, in das Gefahrengebiet einzudringen ohne dass dies durch die Schutzeinrichtung detektiert würde. D.h. mit anderen Worten das Überwachungsgebiet ist *geschlossen*. Die Schutzeinrichtung ist ausserdem derart ausgestaltet, dass variierende Ballenprofile auf erstere keinen störenden Einfluss ausüben können. Ein weiterer bedeutender Vorteil liegt darin, dass sich die Schutzeinrichtung selbst überwacht, d.h. dass Ausfälle der Sensoren keine Einbusse in der Schutzwirkung bewirken und/oder sofort erkannt werden. Zudem erfolgt die Anordnung der Schutzeinrichtung derart, dass der Überwachungsbereich nur minimal grösser als der Gefahrenbereich ist. Derart können unnötige Abschaltungen vermieden werden.

Anhand nachfolgender Figuren sind Ausführungsbeispiele der Erfindung näher erläutert.

Fig. 1 zeigt eine Textilfaserballen-Abtragmaschine in Seitenansicht;

Fig. 2 zeigt die Textilfaserballen-Abtragmaschine von Figur ,in einer Draufsicht von oben;

Fig. 3 zeigt in schematischer Darstellung eine Ballenabtragmaschine mit zwei seitlichen Überwachungsbereichen;

Fig. 4 zeigt in schematischer Darstellung eine Ballenabtragmaschine mit zwei seitlichen und einem dazwischenliegenden Überwachungsbereich;

Fig. 5 zeigt zwei prinzipielle Anordnungsmöglichkeiten der Sensoren (horizontal und vertikal orientierte Schutzvorhänge);

Fig. 6A zeigt eine Ballenabtragmaschine mit vier horizontal und zwei vertikal ausgerichteten Ultraschallsensoren;

Fig. 6B zeigt eine Ballenabtragmaschine mit je zwei seitlichen, vertikal orientierten Ultraschallsensoren und mit Ultraschallsensoren für einen stirnseitigen Schutzvorhang;

Fig. 7 zeigt eine Ballenabtragmaschine mit einer an einem Bügel über dem Abtragorgan angeordneten Sensorik;

Fig. 8 zeigt ein Ausführungsbeispiel mit horizontal orientierten Schutzvorhängen und einer stirnseitigen Schutzplatte;

Fig. 9 zeigt ein Ausführungsbeispiel mit einem optischen Sensorsystem und vertikal orientiertem Schutzvorhang;

Fig. 10 zeigt ein Ausführungsbeispiel mit einem Selbstüberwachungssystem.

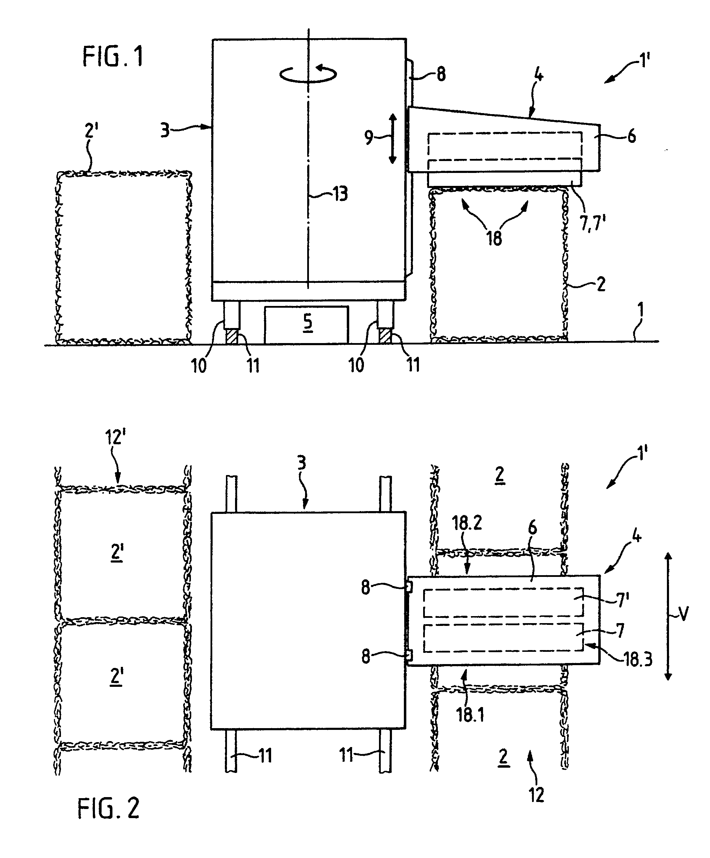

In den Figuren 1 und 2 ist zur Veranschaulichung eine herkömmliche Textilfaserballen-Abtragmaschine in Seitenansicht (Fig. 1) und in einer Draufsicht von oben (Fig. 2) dargestellt. Die Ballenabtragmaschine 1 zum Abtragen von Textilfasern, die als Faserballen 2 vorliegen, umfasst ein Maschinengestell 3 mit einem Abtragorgan 4 und einen Flockentransportkanal 5. Das Maschinengestell zusammen mit dem Abtragorgan 4 sind in den zwei Vorschubrichtungen V bewegbar.

Das Abtragorgan 4 selbst enthält eine Gehäusekonstruktion 6, in welcher eine oder mehrere rotierende Abtragwalzen 7, 7' antreibbar gelagert sind. Die durch die Abtragwalzen von den Faserballen 2 abgetragenen Faserflocken, werden durch die Gehäusekonstruktion 6 geführt und durch eine nicht eingezeichnete Ventilationsvorrichtung in bekannter Weise in den Flockentransportkanal 5 gefördert. Das Abtragorgan 4 ist längs einer Führungsschiene 8 in vertikaler Richtung (in Figur 1 durch die Pfeilrich tung 9 bezeichnet) verschiebbar, um es auf die Ballen aufsetzen, davon abheben und um es in der variablen Abtraghöhe bewegen zu können. Ausserdem ist der obere Teil der Gehäusekonstruktion um eine vertikale Achse 13 drehbar, so dass das Abtragorgan um 180° gedreht werden kann, um eine auf der Gegenseite angeordnete, zweite Reihe von Faserballen 2' abtragen zu können.

Das Maschinengestell 3 ist auf der Unterseite mit antreibbaren Rädern 10 versehen, welche es gestatten, die Textilfaserballen-Abtragmaschine 1 auf einer Schiene 11 entlang der Faserballenreihe 12 bzw. 12' (vgl. Fig. 2) zu verschieben. Auf diese Weise können durch Hin- und Her-Bewegung der ganzen Maschine 1 und gleichzeitigem Senken bzw. Heben des Abtragorgans 4 die in Reihe angeordneten Faserballen 2, 2' schichtweise abgetragen werden. Die Faserflocken werden kontinuierlich über den Flockentransportkanal 5 einer Weiterbearbeitung zugeführt. Da die Maschine grundsätzlich in zwei Vorschubrichtungen bewegt wird, sind hier Schutzvorkehrungen für beide jeweils in Richtung liegenden Seiten des Abtragorgans 4 vorzusehen.

Die rasch rotierenden, mit Rupf-Nocken besetzten Abtragwalzen 7, 7' des Abtragorgans 4 stellen ein erhebliches Gefahrenpotential dar. Es muss unter allen Umständen verhindert werden, dass Werkzeuge und vor allem menschliche Extremitäten während des Betriebes in den Gefahrenbereich 18 dieser Abtragwalzen gelangen können. Ziel der Erfindung ist es, nicht nur den Stirnbereich 18.3 sondern auch für die seitlichen Bereiche 18.1, 18.2 dieses Gefahrenbereichs eine sichere und zuverlässige Schutzeinrichtung vorzusehen.

Die Abtragwalzen 7, 7' sind vorzugsweise derart ausgelegt, dass sie möglichst genau mit der üblichen Breite der Faserballenreihe 12 übereinstimmt. Selbstverständlich ist es möglich, dass das Abtragorgan die Ballen stirnseitig überragt. Diesfalls müssen für den Stirnbereich besondere Schutzmassnahmen getroffen werden, bspw. indem die rotierende Abtragwalzen 7, 7' gegen Zugriff von vorn in ihrem Stirnbereich 18.3 abgedeckt werden. Für die Überwachung des Stirnbereichs 18.3 werden vorzugsweise Vorrichtungen gemäss der CH-Patentanmeldung Nr. 120/89-1 derselben Anmelderin verwendet.

Wenngleich die Erfindung im folgenden anhand der vorstehend beschriebenen Ballenabtragmaschine erläutert wird, muss betont werden, dass sich die Erfindung auch mit anderen Textilmaschinen einsetzen lässt. Prinzipiell kann die Erfindung zusammen mit allen bearbeitenden Maschinen, insbesondere mit fahrbaren, bearbeitenden Maschinen verwendet werden. Es ist aber auch möglich, bspw. eine Ballenabtragmaschine starr anzuordnen und die Ballen bspw. auf einem Förderband relativ zur Maschine zu bewegen.

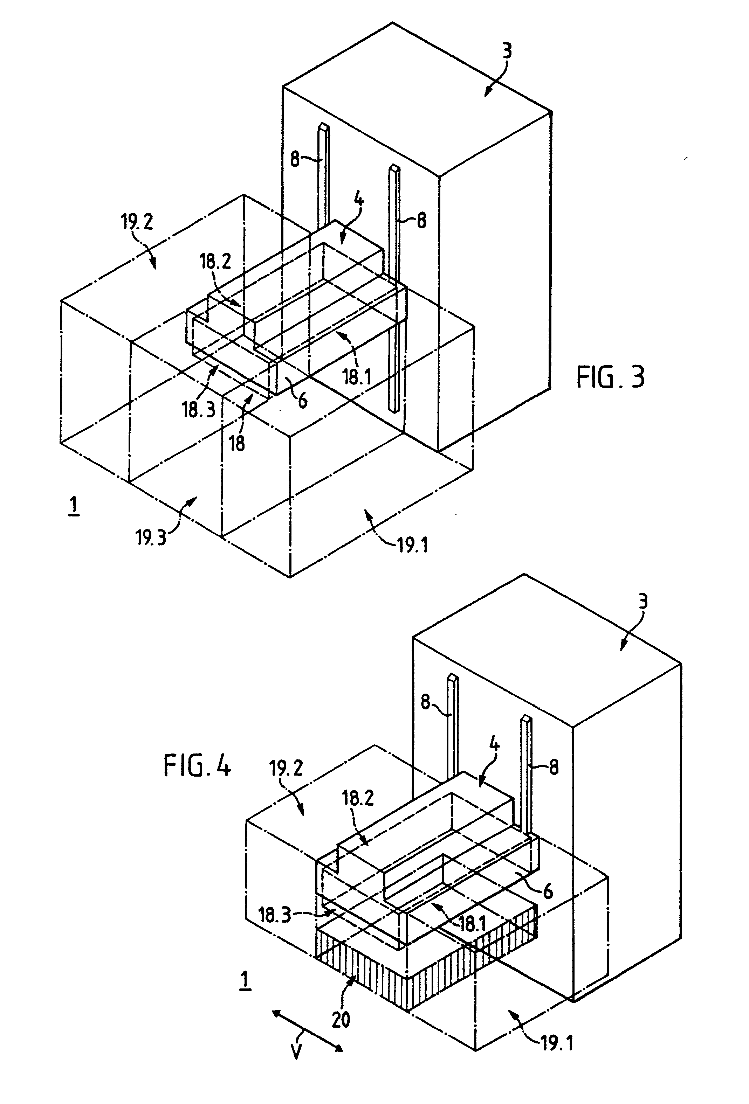

Figur 3 zeigt in schematischer Weise das Konzept der vorliegenden Erfindung. Der eigentliche Gefahrenbereich 18, der die hier nicht eingezeichneten Abtragwalzen umschliesst, ist durch eine gestrichelte Linie angedeutet. Es ist gut ersichtlich, dass ein grosser Teil des Gefahrenbereichs 18 durch die Gehäusekonstruktion 6 des Abtragorgans 4 abgedeckt ist. Eine Verletzungsgefahr für Bedienungspersonen oder aber auch ein Beschädigen der Walzen durch eindringende Gegenstände kann hier nur von unten her erfolgen. In diesem unteren Bereich können wiederum 3 Zonen unterschieden werden. Einerseits ist dies der stirnseitige Bereich 18.3, andererseits die beiden seitlichen Bereiche 18.1, 18.2, die hier je in Vorschubrichtung des Abtragorgans liegen.

Gemäss der Erfindungsaufgabe sollen Schutzmassnahmen für den gesamten Gefahrenbereich 18, d.h. insbesondere auch gegen einen seitlichen Zugang in den Gefahrenbereich 18 des Abtragorgans 4 getroffen werden. Es soll mit anderen Worten sichergestellt werden, dass auch ein Eindringen in den unteren, seitlichen Gefahrenbereich 18.1, 18.2 verhindert wird. Die Erfindungsidee geht nun davon aus, dass ein Überwachungsgebiet durch Sensoren derart überwacht wird, dass das sensorisch überwachte Gebiet zusammen mit festen Bauelementen (Gehäuse, etc.), Boden und allfälligen zusätzlichen Schutzeinrichtungen einen lückenlosen Übergang bildet oder in sich geschlossen ist. D.h. es wird angestrebt, den Gefahrenbereich durch eine topologisch geschlossene Schutzhülle, bestehend aus Sensorbereichen und ev. festen Elementen (Ballen, Maschine, etc.), zu umschliessen. Das Überwachungsgebiet soll mit anderen Worten *geschlossen* sein.

Dazu wird ein geschlossener Überwachungsbereich, der seitliche Bereiche 19.1, 19.2 und den Stirnbereich 19.3 umfasst, erfindungsgemäss durch Sensoren lückenlos überwacht. Es wird so verhindert, dass ein Gegenstand seitlich oder von vorne in den Gefahrenbereich eindringen könnte, ohne dass er durch die Sensoren detektiert würde. Bei Annäherung eines Objektes in die Gefahrenzone werden Schutzmassnahmen ergriffen, bspw. die Walzen durch eine Schnellabschaltung zum Stillstand gebracht. Bedingt durch die der Maschine immanente Trägheit muss ein Objekt frühzeitig erfasst werden, damit die Schutzmassnahme rechtzeitig ergriffen und ihre Wirkung entfalten kann. Dies führt dazu, dass das Überwachungsgebiet grösser sein muss, als die Bereiche 18.1, 18.2 des Gefahrenbereichs 18. Das seitlich zu überwachende Gebiet 19.1, 19.2, welches den beiden Gefahrenbereichen 18.1, 18.2 vorgelagert ist, ist in Figur 3 schematisch durch strichpunktierte Linien angedeutet. Die Grösse und Form des Überwachungsgebiets kann variieren und ist in Abhängigkeit der grösstmöglichen Relativgeschwindigkeit zwischen dem Gefahrenfeld und dem eindringenden Gegenstand (z.B. Hand) und der erforderlichen Zeit bis die Gefahrenquelle beseitigt wird, zu bestimmen. Dabei muss eine notwendige, in der Regel behördlich vorgeschriebene Sicherheitsdistanz (bspw. Armlänge) vom Gefahrenbereich eingehalten werden. Die Erfindung berücksichtigt die Forderung nach einem optimierten Überwachungsbereich, d.h. bei hoher Sicherheit kann das Überwachungsgebiet minimiert werden, so dass im Betrieb keine unnötigen Abschaltungen erfolgen.

Das bspw. in Figur 3 eingezeichnete seitliche Überwachungsgebiet 19.1, 19.2 bildet einen lückenlosen Übergang zum Maschinengestell 3, der Gehäusekonstruktion 6 und dem Boden 1. Ein den Gefahrenbereich vollständig umhüllendes Überwachungsgebiet wird erreicht, indem die Stirnseite 19.3 des Abtragorgans 4 mit einer Einrichtung gemäss der CH-Patentanmeldung Nr. 00 120/89-1 derselben Anmelderin überwacht wird oder indem mechanische Schutzmassnahmen getroffen werden. Im Gegensatz zu herkömmlichen Schutzeinrichtungen bestehen damit keine "Umgehungsmöglichkeiten" in den Gefahrenbereich hinein. Selbstverständlich bietet die Erfindung die Möglichkeit, das Überwachungsgebiet verschieden anzuordnen. Insbesondere können die seitlichen Überwachungsgebiete 19.1, 19.2 nicht bis zum Boden reichen (Fig. 4). Diesfalls wird ein zusätzliches, unter dem Abtragorgan 4 liegendes Überwachungsgebiet 20 vorgesehen, dass die beiden seitlichen Gebiete 19.1,19.2 lückenlos verbindet. Dieses Überwachungsgebiet 20 wird in analoger Weise mittels einem mindestens annähernd parallel zu einer horizontalen Ebene bzw. zur bearbeitenden Fläche der Maschine verlaufenden Schutzvorhang überwacht.

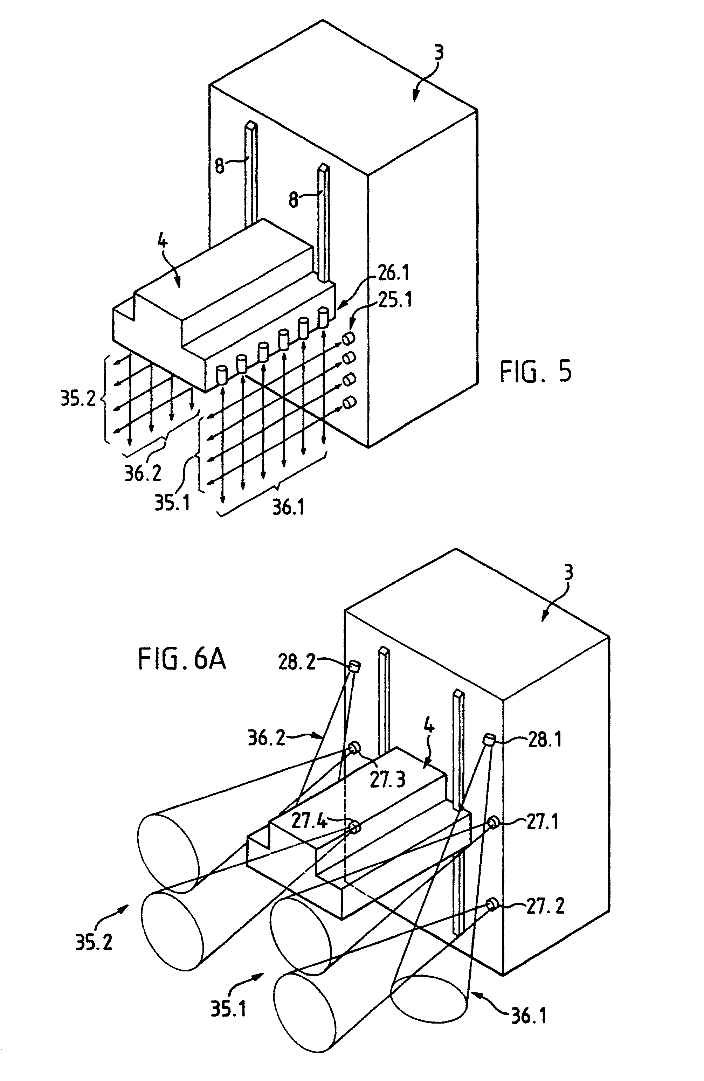

Zur Überwachung werden mehrere Sensoren derart angeordnet, dass sie mindestens einen Schutzvorhang bilden, der zusammen mit festen Teilen (Boden, Maschinengestell, etc.) das Überwachungsgebiet definiert. Als Sensoren können Taster, Einwegsysteme oder Distanzmessgeräte auf optischer-, Radar- Ultraschall- oder Infrarot-Basis Verwendung finden. Figur 5 verdeutlicht die Anordnung der Sensoren bzw. des Vorhangs an zwei grundsätzlichen Anordnungsprinzipien. Auf der einen Seite des Abtragorgans sind je ein erster horizontaler und vertikaler Sensor-Array 25.1, 26.1 und auf der anderen Seite entsprechende zweite (hier nicht sichtbare) Sensor-Arrays angeordnet. Diese bilden je einen vertikal orientierten Schutzvorhang 36.1, 36.2 bzw. horizontal orientierten Schutzvorhängen 35.1, 35.2. Solche vertikal bzw. horizontal orientierten Schutzvorhänge können wie in diesem Beispiel gemäss Figur 5 kombiniert verwendet oder alleine verwendet werden. Die Begriffe "horizontal" und "vertikal" beziehen sich dabei nicht auf die Lage des Schutzvorhangs, sondern auf die Ausrichtung der Sensoren, bzw. der Ausrichtung der Achsen deren Erfassungskegel. Wie aus der Figur 5 ersichtlich ist, verlaufen in diesem Ausführungsbeispiel sowohl die horizontal orientierten Vorhänge 35.1, 35.2 sowie die vertikal orientierten Vorhänge 36.1, 36.2 mindestens annähernd parallel zu einer vertikalen Ebene und parallel zum Abtragorgan. Der Vorhang wird aus den Erfassungskegeln mehrerer Sensoren gebildet. Es muss darauf geachtet werden, dass die sich zwischen den Kegeln ergebenen Zwischenräume kleiner sind als die minimale Ausdehnung der zu detektierenden Objekte. Die Erfindung dient in erster Linie dem Personenschutz. In diesem Beispiel ist der Vorhang so ausgelegt, dass die Hand bzw. der Arm, der in die Gefahrenzone greifenden Personen detektiert werden soll. Die Zwischenräume dürfen demzufolge eine maximale Grösse von ca. 10 cm (Armdurchmesser) haben. Es ist auch möglich, den Vorhang so auszulegen, dass er die ganze Person detektieren muss. In diesem Fall dürften die Zwischenräume bis zu bspw. 50 cm gross sein. Allerdings muss dann das Verhältnis zwischen Gefahrenbereich und Überwachungsbereich vergrössert werden. Die Sensorik erfasst dann bspw. Objekte bereits in einem Abstand von 1 bis 2 m vom Gefahrenbereich.

Es versteht sich von selbst, dass bei einer Neigung des Abtragorgans, d.h. wenn der Abtragvorgang in einer gegenüber der Horizontalen geneigten Ebene erfolgt, in der Regel auch eine entsprechende Neigung der Schutzvorhänge erfolgt. Diesfalls sind die Schutzvorhänge 36.1, 36.2 vorzugsweise senkrecht bzw. parallel zur Abtragebene (Ebene in der die Abtragwalzen die Ballen bearbeiten) ausgerichtet.

Eine erste Anordnung eines Sensorsystems mit Ultraschallsensoren ist in Figur 6A dargestellt. Vier untere, am Maschinengestell und seitlich des Abtragorgans angebrachte Ultraschallsender-/empfänger 27.1-27.4 bilden zwei horizontal orientierte Schutzvorhänge 35.1,35.2. Als Ultraschallsender-/empfänger können herkömmliche Ultraschallwandler eingesetzt werden, die bei Detektion eines Gegenstandes bzw. Änderung des Ultraschallsignals ein entsprechendes elektrisches Ausgangssignal liefern, dass in einer Steuerungseinrichtung ausgewertet werden kann. Zwei vertikal orientierte Schutzvorhänge 36.1, 36.2 werden durch zwei weitere, ebenfalls am Maschinengestell 3 angebrachte Ultraschallsensoren 28.1, 28.2 gebildet. Wie in Figur 6A angedeutet, besitzen die Ultraschallsender eine gewisse Streuung. Das seitliche Überwachungsgebiet entspricht hier dem durch die räumliche Ausdehnung der Erfassungskegel abgeschlossenen Gebiet. Benutzt man Ultraschallsensoren, bei denen für den Sender und den Empfänger derselbe Wandler verwendet wird, so befindet sich im Nahbereich bekanntlich eine sogenannte Totzone, in der Gegenstände nicht detektiert werden können. Diese Tatsache muss insbesondere bei den unteren Sensoren 27.1-27.4 berücksichtigt werden. Die beiden über dem Abtragorgan angeordneten Sensoren 28.1, 28.2 erfassen mit dem vertikal orientierten Vorhang diese Totzone der unteren Sensoren 27. 127.4, so dass je drei Sensoren zusammen die seitlich des Abtragorgans liegenden Überwachungsbereiche lückenlos erfassen. Es versteht sich, dass die oberen Sensoren 28.1, 28.2 um eine ihrer Totzone entsprechende Distanz über dem Abtragorgan bzw. dessen oberster Position angeordnet werden.

Je nach konkreten Abmessungen und Konstruktion der Ballenabtragmaschine müssen die Sensoren bei Bedarf verschieden angeordnet sein. Die Anordnung der Sensorik bestimmt sich des weiteren wesentlich nach der Art und Charakteristik der Sensoren sowie deren Anzahl. Insbesondere ist es möglich, die Sensoren nicht direkt am Maschinengestell 3 bzw. dem Abtragorgan 4 anzuordnen, sondern entsprechend Figur 68 an Auslegern 43, die am Maschinengestell angebracht sind. Bei geeigneter Charakteristik können sowohl ein vertikal, als auch ein horizontal orientierter Vorhang je durch einen einzelnen Sensor gebildet sein.

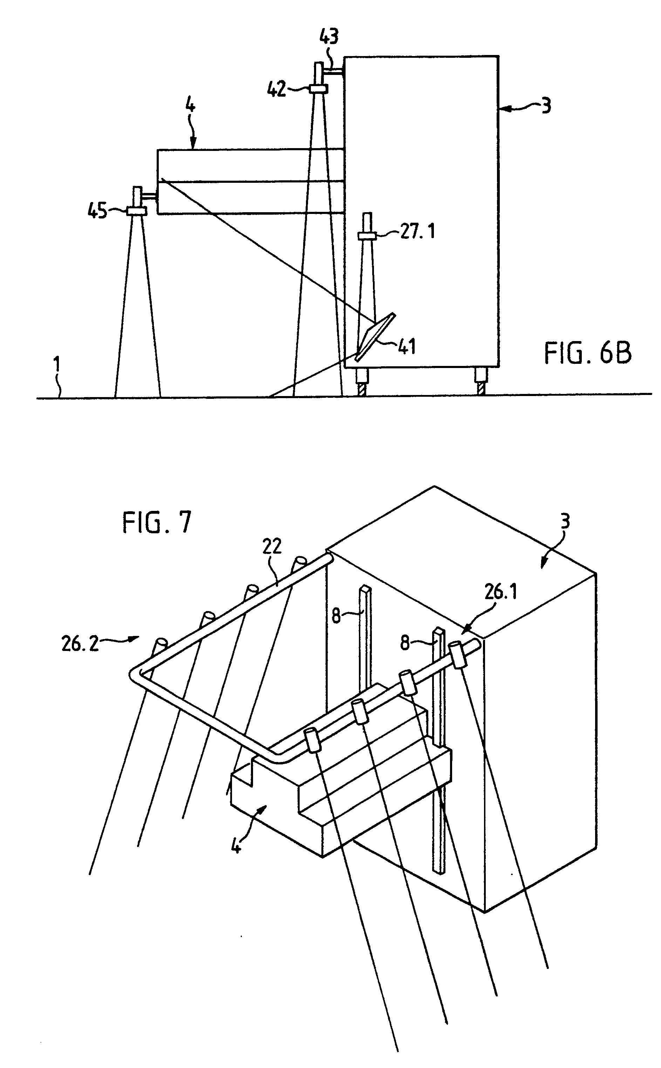

In Figur 6B ist eine solche Anordnungsmöglichkeit näher dargestellt. Ein erster Ultraschallsensor 27.1 ist am Maschinengestell derart angebracht, dass sein Erfassungskegel senkrecht gegen unten (bzw. senkrecht gegen die Abtragebene) ausgerichtet ist. Im Abstand vom Sensor 27.1 ist ein Reflektor 41 im Bereich seines Erfassungskegels angebracht. Dieser Re flektor ist so ausgelegt, dass der Strahl in zwei Strahlrichtungen aufgespaltet wird. Dies wird erreicht, indem der Reflektor 41 eine Prismenform aufweist. Eine breite Streuung des Kegels kann erreicht werden, wenn der Reflektor bspw. eine konvexe Form aufweist. Es ist auch möglich, den Reflektor 41 in der einen Achse konvex auszubilden, um den Strahl in dieser Ebene möglichst auszudehnen, und in einer senkrecht dazu stehenden Achse konkav auszubilden, um den Strahl in der entsprechenden Ebene zu bündeln (Sattelform der Oberfläche). Dadurch kann bspw. ein in seitlicher Richtung schmaler und vertikal gestreuter Schutzvorhang erreicht werden. Der Reflektor 41 selber ist noch in der Totzone des Tastbereichs angeordnet, so dass allfällige Verschmutzungen der Reflektoroberfläche nicht als Störungen erfasst werden. Der Vorteil dieser Anordnung liegt zudem darin, dass eine Totzone, wie sie bei der Ausführung gemäss Fig. 6A auftritt, vermieden wird. Ein zweiter Ultraschallsensor 42 ist an einem Träger 43 am Maschinengestell 3 angebracht. Dieser zweite Ultraschallsensor 42 ist ebenfalls vertikal ausgerichtet und erfasst den Raum im Nahbereich des Maschinengestells 3, wo der Erfassungskegel des ersten Sensors 41 allenfalls noch ungenügend gestreut ist. Die Sensoren sind bei diesem Ausführungsbeispiel gut geschützt und der Strahl kann in einfacher Weise ausgerichtet und in seiner räumlichen Ausdehnung beeinflusst werden. In diesem Ausführungsbeispiel ist stirnseitig ein zusätzlicher Schutzvorhang durch mehrere Sensoren 45 vorgesehen. Damit wird ein geschlossenes Überwachungsgebiet für das Abtragorgan 4 realisiert.

Um mit einem vertikal orientierten Schutzvorhang ein gewünschtes, seitliches Überwachungsgebiet abgrenzen zu können, wird im Ausführungsbeispiel gemäss Figur 7 ein in einer horizontaler Ebene liegender, im oberen Bereich des Maschinengestells 3 fest montierter Haltebügel 22 vorgesehen. Es muss beachtet werden, dass auch wenn in dieser Schrift von "vertikal" oder "horizontal" orientiertem Vorhang die Sprache ist, die Sensoren nicht in geometrischem Sinne vertikal oder horizontal ausgerichtet sein müssen. Für bestimmte Anwendungen werden die Sensoren ausserdem gezielt schräg angeordnet, d.h. der Schutzvorhang verläuft nicht exakt parallel zum Abtragorgan 4, sondern bildet mit diesem einen Winkel. In Figur 7 sind am Haltebügel zwei Sensor-Arrays 26.1, 26.2 auf jeder Seite des Abtragorgans 4 angeordnet und leicht schräg gegen aussen ausgerichtet. Jeder Sensor-Array besteht hier aus mehreren UltraschallSendern. Der Übersichtlichkeit halber sind nur die Achsen deren Schallkegel angedeutet. Der resultierende Schutzvorhang hat im Bodenbereich die maximale Entfernung vom Gefahrenbereich.

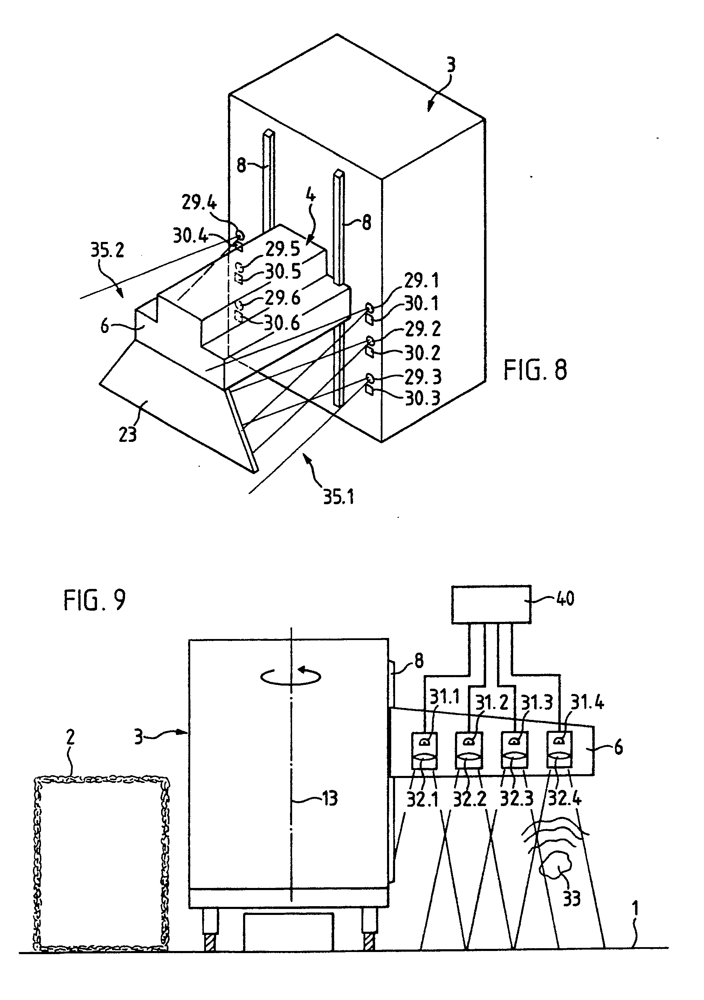

Figur 8 zeigt ein weiteres Ausführungsbeispiel der Erfindung mit zwei horizontal orientierten, optischen Vorhängen 35.1, 35.2. Mehrere aktive Detektorvorrichtungen sind seitlich des Abtragorgans 4 am Maschinengestell 3 angeordnet. Das Abtragorgan ist vertikal entlang der Führungsschienen 8 bewegbar. Je nach möglicher Höhe des Ballenprofils bzw. nach gewünschtem Einstellbereich des Abtragorgans in vertikaler Richtung sind die Detektorvorrichtungen nicht auf den eingezeichneten Bereich beschränkt, sondern erstrecken sich über einen grossen Teil oder über die gesamte Länge der Führungsschienen 8. Die Detektorvorrichtungen sind hier bspw. Reflektionslichtschranken, die je aus einem Sender 29.1-29.6, etwa einer Leuchtdiode oder einem Laser, sowie entsprechenden Empfänger 30.1-30.6 bestehen. An der Stirnseite des Abtragorgans ist hier eine mechanische Schutzplatte 23 vorgesehen. Diese Schutzplatte ist breiter als die Gehäusekonstruktion 6 und dringt mindestens teilweise in die Lichtbereiche der Sender. Durch laufenden Vergleich der Messungen in den Detektorvorrichtungen kann das an der Schutzplatte 23 bewirkte Reflexionssignal, das bei den Empfängern vorhanden ist, von einem durch einen Gegenstand beim Eindringen in den Schutzvorhang hervorgerufenen Signal unterschieden werden.

Eine weitere Variante der Erfindung sieht Sensoreinrichtungen vor, die nur ein *Empfänger*system besitzen, bspw. Bildverarbeitungssysteme (CCD-Array oder passive Infrarotsensoren, etc.). In Figur 9 ist ein Ausführungsbeispiel mit seitlich des Abtragorgans angeordneten Infrarotsensoren dargestellt. Diese bilden einen vertikal orientierten Schutzvorhang. Die auf Körperwärmestrahlung empfindlichen Infrarotsensoren 31.1-31.3 mit zugehöriger Optik 32.1-32.3 sind seitlich an der Gehäusekonstruktion 6 angebracht. Diese Infrarotsensoren werden in einer bevorzugten Ausführungsform mittels eines Steuergerätes 40 derart beschaltet, so dass sie Änderungen des Wärmebildes detektieren können. Damit sind sie in der Lage, das Annähern oder Eindringen von Händen und anderen wärmestrahlenden Gegenständen 33 in die Gefahrenzone bzw. den Überwachungsbereich festzustellen.

Ein wesentlicher Vorteil der erfindungsgemässen Sensorsysteme besteht darin, dass die Sensorik und die Steuereinheit als Modul auch mit herkömmlichen Ballenabtragmaschinen kombinierbar ist. Für bestimmte Anwendungen kann es erforderlich sein, die Sensoren höhenverstellbar anzuordnen. Insbesondere wenn das Abtragorgan über eine grossen Höhenverstellbereich verfügt, kann dadurch erreicht werden, dass die Sensorik nicht über diesen ganzen Bereich angeordnet werden muss, sondern dass die Überwachungsbereiche bzw. die Schutzvorhänge dem Abtragorgan folgen. Die Sensoren können entweder direkt am Abtragorgan montiert sein oder bspw. an höhenverstellbaren Halteorganen, die analog zum Abtragorgan entlang von Führungsschienen am Maschinengestell bewegt werden können.

Als Schutzmassnahmen kommen eine Notabschaltung der Abtragwalzen (mechanische oder elektrische Bremse), das Betätigen von mechanischen Schutzmitteln (Abdeckungen, Einziehen der Walze in ein Gehäuse), Warnsignal, etc. in Frage. Zu Beachten ist, dass Schutzmassnahmen nur ausgelöst werden sollen, wenn tatsächlich ein Objekt in das Überwachungsgebiet eindringt. Falls Sensoren eingesetzt werden, die Ballen nicht detektieren (z.B. Infrarotsensoren) kann das Eindringen einer Person in den Überwachungsbereich direkt festgestellt werden.

Die Erfindung kann auch in Kombination mit mechanischen Schutzeinrichtungen, insbesondere solchen nach der CH Patentschrift Nr. 2956/89, verwendet werden. Dabei ist es möglich, die Sensorik zur Steuerung der mechanischen Schutzeinrichtungen zu verwenden. Die Sensorik gemäss der Erfindung löst diesfalls die mechanischen Schutzeinrichtungen bei Eindringen eines Gegenstandes in das Überwachungsgebiet aus.

Da die Textilballen, je nach eingesetzten Sensoren unter Umständen ebenfalls detektiert werden, muss dies bei der Auslösung von Schutzmassnahmen berücksichtigt werden. Es sollen keine Schutzmassnahme ausgelöst werden, wenn die Sensoren ein Signal durch Ballens ausgelöstes Signal erhalten, d.h. das Schutzsystem soll sich gegenüber den Ballen neutral verhalten. Dies kann erreicht werden, indem das bekannte Ballenprofil bei der Auslösung von Schutzmassnahmen berücksichtigt wird. Die Textilballen werden auf diese Weise in das erfindungsgemässe Schutzkonzept miteinbezogen. Solange sich das Abtragorgan über den Textilballen befindet, besteht keine Gefahr, dass eine Person von der Seite oder von unten her in den Gefahrenbereich 18 eindringt. Die Ballen bilden diesfalls im Sinne der Erfindung Elemente der geschlossenen Umhüllung des Gefahrenbereichs.

Um die Zuverlässigkeit der erfindungsgemässen Sensoreinrichtung noch weiter erhöhen zu können, wird vorzugsweise ein Selbstüberwachungssystem vorgesehen. Entweder werden Referenzobjekte oder -sender in den Messraum der Sensoren eingebracht und/oder der Sender eines Sensors wird als Referenzsignal für den Empfänger eines anderen Sensors verwendet.

Bei einer Infrarot-Sensorik wird bspw. eine definierte Referenz-Heizquelle an einer unzugänglichen Stelle der Abtragmaschine oder am Boden vorgesehen. Eine weitere Möglichkeit besteht darin, in bestimmten Testintervallen eine Referenz-Heizquelle zu zünden. Diesfalls kann diese auch im Überwachungsbereich, bspw. unmittelbar vor dem Sensor angeordnet sein. Dadurch wird die Bewegung eines warmen Objektes simuliert, so dass auch die Ansprechzeit der Sensorik überwacht werden kann. Für andere Sensoren können in entsprechender Weise adäquate ReferenzObjekte bzw. -sender in Intervallen aktiviert werden.

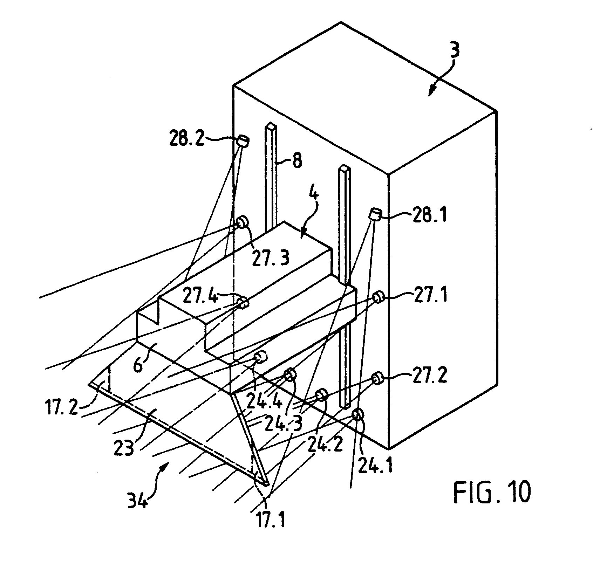

Im Beispiel gemäss Figur 10 ist eine Ultraschallsensorik eingesetzt, wie sie anhand von Figur 6A beschrieben wurde. Zusätzlich ist in diesem Ausführungsbeispiel im Stirnbereich eine Schutzplatte 23 vorhanden. Zwischen den beiden seitlichen Schutzvorhängen liegt ein parallel zur Abtragebene liegender Schutzvorhang 34. Der Schutzvorhang wird durch mehrere in einer horizontalen Linie am Maschinengestell 3 angeordnete Sensoren 24.1-24.4 aufgespannt. Dieser Schutzvorhang 34 schliesst zusammen mit den seitlichen Schutzvorhängen sowie der stirnseitigen Schutzplatte 23 das Überwachungsgebiet. Derart kann auch von vorne nicht unbemerkt unter der Schutzplatte hindurch in den Gefahrenbereich unter den Abtragwalzen eingedrungen werden.

Die Anordnung der Elemente für das Selbstüberwachungssystem sollen anhand dieses Ausführungsbeispiels für zwei Möglichkeiten näher erläutert werden. Es ist möglich, das Ultraschallsignal der beiden oberen Ultraschallsender/-empfänger 28.1, 28.2 als Referenzsignal für die unteren Ultraschallsender/-empfänger einzusetzen und umgekehrt. Dabei werden die Sender/Empfänger so gesteuert, dass sich Arbeits- und Testzyklen der oberen und unteren Sender abwechseln. Solange die entsprechenden Signale gegenseitig empfangen werden, ist dadurch die Funktionsbereitschaft der Sensorik nachgewiesen. Durch eine entsprechende Selbstüberwachungseinheit kann dies überwacht werden. Sobald ein Signal nicht mehr empfangen werden sollte, können besondere Massnahmen eingeleitet werden, bspw. ein Abschalten der Maschine, Warnsignal etc. Eine weitere Möglichkeit besteht darin, an der Schutzplatte 23 an deren seitlichen Kante zwei Referenz-Objekte 17.1,17.2 mit guter Ultraschall-Reflektion anzubringen. Unter Umständen kann die Schutzplatte, die in den seitlichen Überwachungsbereich reicht, selber als Referenzobjekt dienen. Selbstverständlich ist es auch möglich, anstelle von Referenz-Objekten 17.1, 17.2 spezielle Referenz-Sender vorzusehen. Bei einer Infrarotsensorik können in analoger Weise die Referenz-Objekte 17.1,17.2 zwei Heizquellen sein.

Der Einsatz von mehreren Sensoren innerhalb eines Überwachungsgebiets bringt es mit sich, dass sich die Messräume der einzelnen Sensoren teilweise überlappen, d.h. dass für gewisse Bereiche des Überwachungsgebiets eine aktive Redundanz vorliegt. Diese Tatsache kann ebenfalls für die Selbstüberwachung der Sensorik beigezogen werden. Sofern in einem solchen durch zwei (oder mehr) Sensoren überwachten Bereich nur durch einen Sensor ein Signal empfangen wird, bedeutet dies, dass eine Störung in der Sensorik vorhanden ist.

Es muss beachtet werden, dass sich die Schutzeinrichtung nicht nur mit horizontal bewegten Ballenabtragmaschinen einsetzen lässt. Sofern sich das Abtragorgan entlang einer geneigten Fläche bewegt, ist es auch hier wesentlich, dass die Sensorik 26-30 so ausgelegt ist, dass der Überwachungsbereich keine Toträume aufweist.

**Ansprüche**

1. Ballenabtragmaschine mit sensorischer Schutzeinrichtung, **dadurch gekennzeichnet**, dass durch mindestens ein Sensorsystem ein mindestens annähernd lückenloser Schutzvorhang (35, 36) zwischen Boden (1), Maschinenteilen (3, 4, 23) und Ballen (2) aufgespannt ist.

2. Ballenabtragmaschine mit sensorischer Schutzeinrichtung nach Anspruch 1, **dadurch gekennzeichnet**, dass mindestens ein Schutzvorhang (35, 36) je seitlich des Abtragorgans (4) aufgespannt ist.

3. Ballenabtragmaschine mit sensorischer Schutzeinrichtung nach Anspruch 2, **dadurch gekennzeichnet**, dass beidseits des Abtragorgans (4) ein Schutzvorhang (35.1, 35.2) mindestens annähernd senkrecht zur Abtragebene und mindestens annähernd parallel zum Abtragorgan (4) verläuft.

4. Ballenabtragmaschine mit sensorischer Schutzeinrichtung nach Anspruch 2 oder 3, **dadurch gekennzeichnet**, dass die seitlichen Schutzvorhänge (35.1, 35.2) durch einen stirnseitigen Schutzvorhang verbunden sind.

5. Ballenabtragmaschine mit sensorischer Schutzeinrichtung nach einem der vorstehenden Ansprüche, **dadurch gekennzeichnet**, dass mindestens die seitlichen Schutzvorhänge (35.1, 35.2) in ihrer vertikalen Ausdehnung vom Abtragorgan (4) bis zum Boden (1) verlaufen.

6. Ballenabtragmaschine mit sensorischer Schutzeinrichtung nach einem der vorstehenden Ansprüche, **dadurch gekennzeichnet**, dass die Schutzvorhänge (35, 36) durch akustische oder optische Sensoren (26.1, 26.2, 27.1-27.4, 28.1, 28.2, 29.1-29.6, 30.1-30.6) mit einem *Sender und* einem *Empfänger* gebildet sind.

7. Ballenabtragmaschine mit sensorischer Schutzeinrichtung nach einem der Ansprüche 1 bis 5, **dadurch gekennzeichnet**, dass die Schutzvorhänge (35, 36) je durch mindestens einen optischen, als *Empfänger* ausgebildeten Sensor (26.1, 26.2,27.1-27.4, 28.1,28.2, 29.1-29.6, 30.1-30.6) gebildet sind.

8. Ballenabtragmaschine mit sensorischer Schutzeinrichtung nach einem der vorstehenden Ansprüche, **dadurch gekennzeichnet**, dass unter dem Abtragorgan ein mindestens annähernd parallel zu einer horizontalen Ebene verlaufender Schutzvorhang (34) verläuft.

9. Ballenabtragmaschine mit sensorischer Schutzeinrichtung nach einem der vorstehenden Ansprüche, **dadurch gekennzeichnet**, dass mindestens ein Sensor (27.1-27.4, 37.1-37.6) am Maschinengestell (3) unter dem Abtragorgan (4) und seitlich von diesem angeordnet ist und mindestens annähernd horizontal und parallel zum Abtragorgan ausgerichtet ist.

10. Ballenabtragmaschine mit sensorischer Schutzeinrichtung nach einem der vorstehenden Ansprüche, **dadurch gekennzeichnet**, dass mindestens ein Sensor (27.1-27.4, 37.1-37.6) am Maschinengestell (3) seitlich des Abtragorgans (4) angeordnet und mindestens annähernd vertikal ausgerichtet ist und dass ein Reflektor (41) innerhalb der Totzone des Sensors (27.1-27.4, 37.1-37.6) angeordnet ist.

11. Ballenabtragmaschine mit sensorischer Schutzeinrichtung nach Anspruch 10, **dadurch gekennzeichnet**, dass der Reflektor (41) eine prismatische Form zur Aufteilung des Erfassungskegels aufweist.

12. Ballenabtragmaschine mit sensorischer Schutzeinrichtung nach Anspruch 10, **dadurch gekennzeichnet**, dass der Reflektor (41) eine konvexe Form zur Streuung des Erfassungskegels aufweist.

13. Ballenabtragmaschine mit sensorischer Schutzeinrichtung nach Anspruch 12, **dadurch gekennzeichnet**, dass der Reflektor (41) eine sattelförmige Oberfläche besitzt.

14. Ballenabtragmaschine mit sensorischer Schutzeinrichtung nach einem der vorstehenden Ansprüche, **dadurch gekennzeichnet**, dass mindestens ein Sensor (26.1, 26.2) seitlich am Abtragorgan (4) angeordnet ist und mindestens annähernd vertikal nach unten ausgerichtet ist.

15. Ballenabtragmaschine mit sensorischer Schutzeinrichtung nach einem der vorstehenden Ansprüche, **dadurch gekennzeichnet**, dass mindestens ein Sensor (28.1, 28.2) derart angeordnet ist, dass sein Messraum Totbereiche der einen Schutzvorhang bildenden Sensoren (27.1-27.4) erfasst.

16. Ballenabtragmaschine mit sensorischer Schutzeinrichtung nach Anspruch 15, **dadurch gekennzeichnet**, dass mindestens ein Sensor (28.1, 28.2) seitlich über dem Abtragorgan (4) am Maschinengestell (3) angeordnet ist und mindestens annähernd vertikal zur Abtragebene ausgerichtet ist.

17. Ballenabtragmaschine mit sensorischer Schutzeinrichtung nach einem der vorstehenden Ansprüche, **dadurch gekennzeichnet**, dass mindestens ein Teil der Sensorik höhenverstellbar am Maschinengestell (3) montiert ist.

18. Ballenabtragmaschine mit sensorischer Schutzeinrichtung gemäss einem der vorstehenden Ansprüche, **dadurch gekennzeichnet**, dass zur Selbstüberwachung der Sensorik (26-30) mindestens ein Referenz-Objekt innerhalb eines durch die Sensorik (26-30) erfassten Gebiets an einem definierten Ort vorgesehen ist.

19. Ballenabtragmaschine mit sensorischer Schutzeinrichtung nach einem der vorstehenden Ansprüche, **dadurch gekennzeichnet**, dass im Bereich der Stirnseite eine Schutzplatte (23) angeordnet ist, die in die beiden seitlichen Überwachungsbereiche (19.1, 19.2) ragt.

20. Ballenabtragmaschine mit sensorischer Schutzeinrichtung nach Anspruch 12,18 und 19, **dadurch gekennzeichnet**, dass zwei Referenz-Objekte (17.1,17.2) an den seitlichen Enden, an der Innenseite der Schutzplatte (23) angeordnet sind.

21. Ballenabtragmaschine mit sensorischer Schutzeinrichtung nach einem der vorstehenden Ansprüche, **dadurch gekennzeichnet**, dass die Sensoren (26.1, 26.2, 27.1-27.4, 28.1, 28.2, 29.1-29.6, 30.1-30.6, 39) als Taster ausgebildet sind.

22. Ballenabtragmaschine mit sensorischer Schutzeinrichtung nach einem der Ansprüche 1 bis 20, **dadurch gekennzeichnet**, dass die Sensoren (26.1, 26.2, 27.1-27.4, 28.1, 28.2, 29.1-29.6, 30.1-30.6, 39.1, 39.2) als sensorische Schranken ausgebildet sind.

23. Ballenabtragmaschine mit sensorischer Schutzeinrichtung nach einem der Ansprüche 21 und 22, **dadurch gekennzeichnet**, dass die Sensoren (26.1, 26.2, 27.1-27.4, 28.1, 28.2, 29.1-29.6, 30.1-30.6, 39.1, 39.2) als Ultraschallsensoren und/oder als Infrarotsensoren ausgebildet sind.

FIG.1

FIG.2

FIG. 3

FIG. 4

FIG. 5

FIG. 6A

FIG. 6B

FIG. 7

FIG. 8

FIG. 9

FIG. 10

**Europäisches Patentamt**

# EUROPÄISCHER RECHERCHENBERICHT

Nummer der Anmeldung

## EP 90 81 0793

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,P | EP-A-0 379 465 (MASCHINENFABRIK RIETER AG) <br> * das ganze Dokument * | 1-23 | D 01 G <br> 31/00 <br> F 16 P 3/14 |
| Y,D,A | FR-A-2 489 375 (TRUETZSCHLER GMBH & CO KG) <br> * Seiten 4 - 6; Figuren 1-6 * | 1,2-23 | |
| Y,A | CH-A-4 937 83 (MASCHINENFABRIK WEINGARTEN AG.) <br> * das ganze Dokument * | 1,2-23 | |
| A | DE-A-3 135 272 (TRUETZSCHLER GMBH &CO KG.) <br> * Ansprüche 1-9; Figuren 1-5 * | 1-23 | |
| A | FR-A-2 509 332 (TRUETZSCHLER GMBH &CO KG.) <br> * Ansprüche 1-14; Figuren 1-6 * | 1-23 | |
| A | FR-A-2 233 423 (K.K.TOYODA JIDOSHOKKI SEISAKUS-HO) <br> * Figuren 1-3 * | | |
| A | DE-A-3 205 394 (HAAG GUENTER) <br> * Zusammenfassung; Figuren 1-10 * | | |
| A | DE-A-2 343 096 (BEER W.) <br> * Anspruch 1; Figuren 1-3 * | | |
| A | DE-A-3 606 594 (WINTERER H.) <br> * Zusammenfassung; Figuren 1-3 * | | |
| A | US-A-3 851 168 (ERBSTEIN) <br> * Figuren 1-7 * | | |

| | RECHERCHIERTE SACHGEBIETE (Int. Cl.5) |
|---|---|
| | D 01 G <br> D 01 H <br> F 16 P |

Der vorliegende Recherchenbericht wurde für alle Patentansprüche erstellt

| Recherchenort | Abschlußdatum der Recherche | Prüfer |
|---|---|---|
| Den Haag | 17 Januar 91 | KARIPIDOU C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument